# EUROPEAN PATENT APPLICATION

(11) **EP 2 216 130 A1**
(43) Date of publication of application: **11.08.2010**
(21) Application number: 09152195.5
(22) Date of filing: 05.02.2009
(51) Int. Cl.: B23K 37/04

(54) **Fairing tool**

(71) Applicant: Metal Products Specialists Inc., Virginia Beach, VA 23452-7037 (US)
(72) Inventor: Horen, David, Portsmouth, VA 23703 (US)
(74) Representative: Piela, Marek

(57) **Abstract**

The subject of the invention is a fairing tool that serves to set the edges of constructive elements on one plane as a result of mechanically aligning them in relation to each other. The tool consists of a body ( **1** ), a front part ( **2** ), a support ( **3** ), a screw (**4** ), a cylindrical nut ( **5** ), a concave pad ( **6** ), a washer ( **7** ) and a slotted grab ( **8** ). The fairing tool, in its body ( **1** ), has an arterial hole ( **9** ) with a triangular shape. The screw ( **4** ) has a threaded part ( **16** ) that is copper-plated.

## Description

### Technical Field

The subject of the invention is a fairing tool that serves to align the edges of construction elements, particularly steel plates, on one plane during welding.

### Background Art

Fairing tools are used to align the edges of constructive elements, including steel plates, in such a manner that they are on the same level and may be welded together to form a smooth seam.

Usually the edge of one plate is lower or higher than the edge of the other to which it is to be welded. Fairing tools are used to raise or lower the plates so that they are aligned on one level.

In the general classification of the many constructive solutions of these tools resulting from the manner in which power of press is exercised, one may distinguish: mechanical tools (wedge tools, thread tools, lever tools, off-center circular cam tools, spring-loaded tools) as well as pneumatic, hydraulic and electromagnetic tools.

For example the mechanical fairing tool made of metal in the shape of "L" and a wedge, is well-known. Fairing, with the help of this tool, is done in this manner that the metal in the shape of the "L" letter is placed upon both edges of the plates that are to be faired. The shorter arm of the L-shaped bar adheres to the lower steel plate and the longer arm is upon the upper plate. The shorter arm is welded to the lower plate. At that time the wedge is placed between the longer arm of the L-shaped bar and the upper plate. The wedge is hammered in between the longer arm of the L-shaped bar and the upper place causing the lowering of the upper plate. The wedge is hammered in until the levels of both plates become even.

A mechanical fairing tool made up of a body joined to a moveable arm is also well known. The moveable arm is on one hand equipped with a lip stop that is situated crosswise to the moveable arm while on the opposite side of the moveable arm, at a certain distance from the lip stop, is a support stop with a sharply delineated top. The support creates a certain angle with the moveable arm. During the operation of fairing the edges, the tool is situated in the space between the metal sheets. The lower metal sheet is raised by the support stop while on the higher metal sheet pressure is applied from above from the lip stop. As a result of the above-mentioned forces a fairing of the surfaces of the metal sheets occurs. After the evening of the surfaces of the metal sheets they are welded together and the tool is moved to another part of the slot.

The above tools enable the fairing of the edges of constructive elements into one plane but the fairing, when utilizing the first of them, is labor intensive and can cause the slipping out of the wedge as well as the breaking of the arm of the L-shaped bar as a result of the too hard hammering of the wedge.

The drawback of the second tool is the necessity of moving it through the slot between the metal sheets. This makes it impossible to shift the edges of the metal sheets directly to each other.

### Disclosure of Invention

The essence of the invention is that the fairing tool, which enables the setting of the edges of the constructive elements on one plane as a result of the mechanical movement of them in relation to each other, is made up of a body, a front part, a support, a screw, a cylindrical nut, a concave pad, a washer and a slotted grab.

It is advantageous if the body has an arterial hole with a triangular shape. Such a hole facilitates the movement of this tool and its placement for fairing elements.

It is also advantageous, if the screw has its threaded part copper-plated. Thanks to that, welding chips do not adhere to the screw.

An advantage of the solution of the invention is the strong and light construction of the tool, thus decreasing the tiredness of the worker and eliminating the risk of injury and also that the screw enables the precise and exact fairing of the edges of the welded elements.

### Brief Description of Figures in the Drawings

The subject of the invention is visible in the example presented in the drawing in which the particular figures present:

fig.1 - view of the side of the fairing tool;

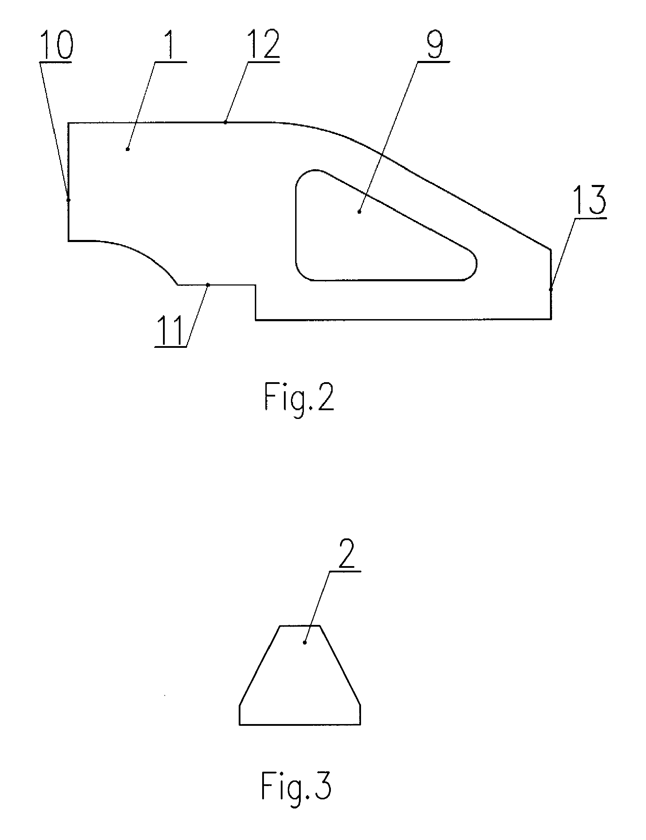

fig.2 - view from the side of the body of the tool, with the arterial hole **9** and edges: side back **10,** lower **11,** upper **12,** front side **13**;

fig.3 - view from the head of the front part;

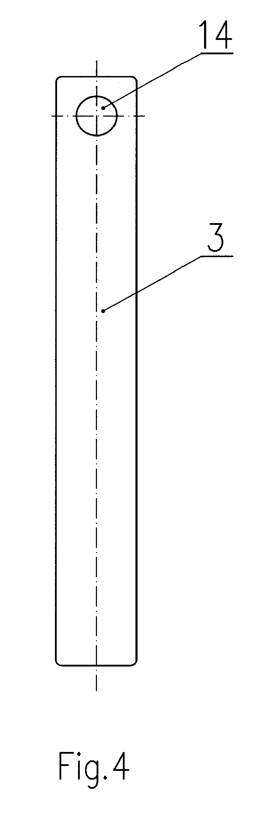

fig.4 - view from the top of the arterial hole **14**;

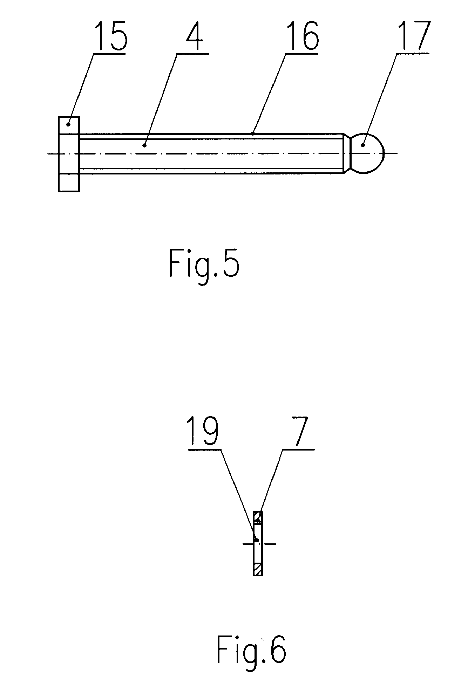

fig. 5 - view from the side of the screw, with the head **15,** threaded part **16**, and front part **17**;

fig.6 - view of the section of the washer, with the hole **19**;

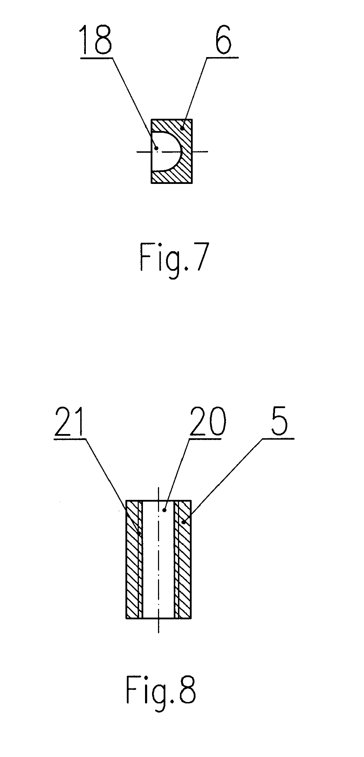

fig.7 - view of the section of the concave pad, with a half-circular opening **18;**

fig.8 - view of the section of the cylindrical nut equiped with an opening **20** as well as thread **21;**

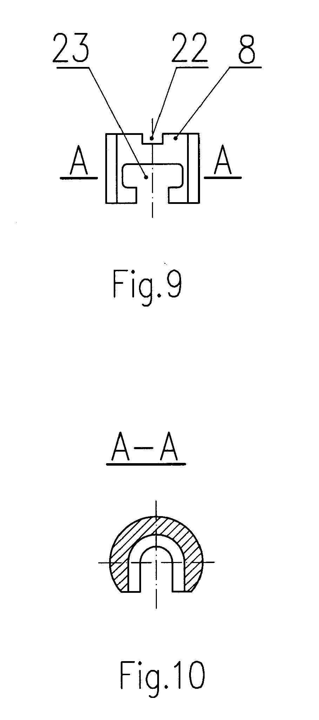

fig.9 - view from the side of the slotted grab equiped with a slot with a rectangular section **22** as well as a half-circular opening **23;**

fig.10 - section along surfaces A-A of the slotted grab.

### Best Mode for Carrying Out the Invention

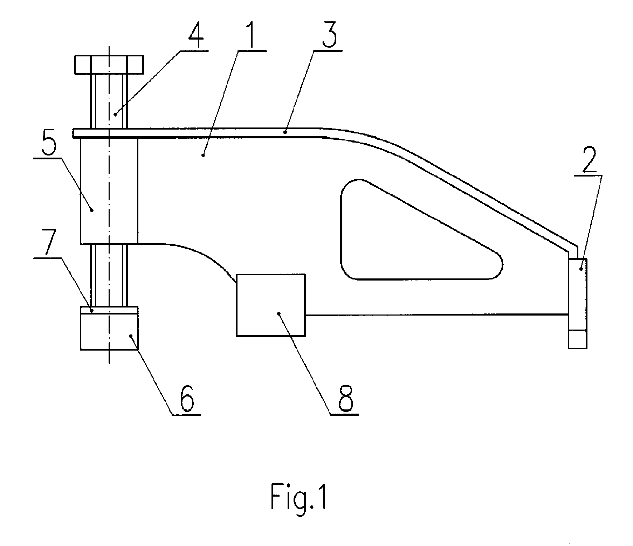

As is shown in fig.1, the fairing tool is made up of a body **1** , a front part **2** , a support **3** , a screw **4** , a cylindrical nut **5** , a concave pad **6** , a washer **7** and a slotted grab **8** .

The front part **2** is joined to the body **1** at the part of the front side edge **13** by a permanent joint. The support **3** is joined to the body **1** along the upper edge **12** by a permanent joint. The cylindrical nut **5** is joined to the body **1** along the edge of the back side **10** by a permanent joint. The slotted grab **8** possesses a slot with the rectangular section **22** at the lower edge **11** of the body **1.** The screw **4** is screwed to the opening **20** of the cylindrical nut **5** with the thread **21.**

The body **1** is equipped with an arterial hole **9** with a triangular shape.

The concave pad **6** is placed upon the screw **4** in such a manner that the front part of the screw **17** is located in the semicircular opening of this pad and is closed by the washer **7**. The washer **7** is joined, with a permanent joint, with the concave pad **6.**

In order to level two plates with the tool according to the invention, a weld stud is welded to the lower plate, near its edge. The weld stud has a length and diameter that fits to the semicircular opening **23** of the slotted grab **8,** since it is on this weld stud that the slotted grab **8** of the fairing tool is fastened in such a way that the screw **4** is located immediately above the higher plate. Next the screw **4** is turned to the direction of the higher plate while at the same time transferring the intensity of stress to the lower plate. The lower plate is lifted upwards by the stress applied to the weld stud attached to the slotted grab **8 .** These actions equalize the level of both plates. The plates can then be welded, and the fairing tool removed by unscrewing the screw.

The fastening weld stud can then be removed by cutting it off, grinding it off or by using heating methods.

## Claims

1. The Fairing Tool that serves to set the edges of constructive elements on one plane as a result of mechanically aligning them in relation to each other, is **characterized** the fact that it consists of a body ( **1** ), a front part ( **2** ), a support ( **3** ), a screw (**4** ), a cylindrical nut ( **5** ), a concave pad ( **6** ), a washer ( **7** ) and a slotted grab ( **8** ).

2. The Fairing Tool, according to claim 1, is **characterized by** the fact that its body ( **1** ), has an arterial hole ( **9** ) with a triangular shape.

3. The fairing tool, according to claim 1., is **characterized by** a screw ( **4** ) has its threaded part ( **16** ) that is copper-plated.
